# EUROPÄISCHE PATENTANMELDUNG

(11) **EP 1 227 030 A1**
(43) Veröffentlichungstag der Anmeldung: **31.07.2002**
(21) Anmeldenummer: 01102013.8
(22) Anmeldetag: 30.01.2001
(51) Int. Cl.: B62D 29/00

(54) **Verwendung eines Profilträgers einer lastaufnehmenden Struktur in verschiedenen Konstruktionsvarianten**

(71) Anmelder: Ford Global Technologies, Inc., A subsidiary of Ford Motor Company, Dearborn, Michigan 48126 (US)
(72) Erfinder: Wesemann, Juergen, 52477 Alsdorf (DE); Lanzerath, Horst, 53902 Bad Muenstereifel (DE)
(74) Vertreter: Drömer, Hans-Carsten, Dipl.-Ing.

(57) **Zusammenfassung**

Die Erfindung betrifft die Verwendung eines Profilträgers einer lastaufnehmenden Struktur in verschiedenen Konstuktionsvarianten, wobei der Profilträger eine im wesentlichen die Außenkontur formende, dünnwandige tragende Schale und einen im von der Schale umschlossenen Innenraum angeordneten, die Schale stützenden Kern aufweist, und wobei der Kern den Innenraum ganz oder teilweise ausfüllt. Sie ist dadurch gekennzeichnet, das die Anpassung des Profilträgers an die Anforderungen der verschiedenen Konstruktionsvarianten über die konstruktive Ausgestaltung des Kernes erfolgt, indem unter anderem das Material, die Form, die Dichte und die Festigkeit des Kernes an die auftretenden Anforderungen angepaßt ist, während die Schale für alle Konstruktionsvarianten im wesentlichen gleich bleibt.

## Beschreibung

Die Erfindung betrifft die Verwendung eines Profilträgers einer lastaufnehmenden Struktur in verschiedenen Konstruktionsvarianten, wobei der Profilträger eine im wesentlichen die Außenkontur formende, dünnwandige tragende Schale und einen im von der Schale umschlossenen Innenraum angeordneten, die Schale stützenden Kern aufweist, und wobei der Kern den Innenraum ganz oder teilweise ausfüllt.

Die Anwendung stützender Kerne bei Profilträgern ist allgemein aus dem Stand der Technik bekannt. Hingewiesen sei hier auf die Anwendungen vor allem in Luft- und Raumfahrtstrukturen und zunehmend im Fahrzeugbau. Aber auch bei Bauwerken wie Windkraftanlagen, Kränen usw. finden Profilträger mit stützendem Kern Anwendung.

Beispielhaft erwähnt ist hier die EP 0594131, in der ein Fahrwerkschemel aus Verbundwerkstoff beschrieben ist, der einen stützenden und formgebenden Kern aufweist. Aus der WO 99/64287 ist ein Herstellungsverfahren für Verstärkungen in einem Hohlraum eines Kraftfahrzeugbauteiles bekannt, bei dem ein Kern aus Metallschaum in ein Karosserieteil eingebracht wird mit dem Ziel, ein verstärktes Bauteil leicht zu gestalten. Ein weiteres Herstellungsverfahren für einen Profilträger mit Schaumkern ist in der WO 00/13958 offenbart. Ein fester Schaumkern wird mit Spiel zur Schale in die Schale eingelegt. Die bestehenden Spalte werden mittels eines expandierenden Polymers ausgefüllt, wodurch auch gleichzeitig die feste Verbindung zwischen Schale und Kern hergestellt wird.

Alle dies bekannten Profilträger sind dabei für einen bestimmten Anwendungsfall gestaltet. Für eine andere Anwendung muß eine neue Konstruktionsvariante des Profilträgers, selbst bei gleichen äußeren Abmessungen, erneut entsprechend der gestellten Anforderungen gestaltet werden. Dies erfordert einen hohen Entwicklungs- und Fertigungsaufwand, da für jede Konstruktionsvariante eine neue Schale und ein neuer Kern entwickelt, die entsprechenden Fertigungseinrichtungen erstellt und die verschiedenen Teile der Konstruktionsvarianten separat gefertigt werden müssen.

Aufgabe der Erfindung ist es demnach, bei Verwendung eines Profilträgers in verschiedenen Konstruktionsvarianten den Entwicklungs- und Fertigungsaufwand möglichst gering zu halten.

Diese Aufgabe wird gelöst mit den Merkmalen des Anspruches 1.

Dadurch, daß die Anpassung des Profilträgers an die Anforderungen der verschiedenen Konstruktionsvarianten über die konstruktive Ausgestaltung des Kernes erfolgt, indem unter anderem das Material, die Form, die Dichte und die Festigkeit des Kernes an die auftretenden Anforderungen angepaßt ist, während die Schale für alle Konstruktionsvarianten im wesentlichen gleich bleibt, lassen sich verschiedene Konstruktionsvarianten aus einer Grundform der Schale sehr einfach erzeugen.

Wenn die Schale für alle Konstruktionsvarianten im wesentliche gleich bleibt, ist der Entwicklungs- und Fertigungsaufwand für die neue Konstruktionsvariante sehr gering. Bei der Entwicklung wird auf die ursprüngliche Konstruktion zurückgegriffen. Es entsteht lediglich der Entwicklungsaufwand für die Gestaltung des Kernes. Bei der Fertigung können alle Einrichtungen für die ursprüngliche Schale weiterverwendet werden, es können sogar die Schalen für mehrere Konstruktionsvarianten auf den gleichen Fertigungseinrichtungen abwechselnd gefertigt werden. Lediglich für den anzupassenden Kern der neuen Konstruktionsvariante fällt der Entwicklungsaufwand und der zusätzliche Fertigungsaufwand an, letzteres vor allem deshalb weil bestehende Fertigungseinrichtungen nur bedingt genutzt werden können.

Bevorzugt wird bereits bei der Entwicklung der ersten Profilträgervariante die Gestaltung so gewählt, das zu einem späteren Zeitpunkt eine Vielzahl von Konstruktionsvarianten mit immer der gleichen Schale und nur geringer Anpassung des jeweiligen Kerns erzeugt werden können.

Dabei kann die Schale in einer bekannten Weise gefertigt sein z. B. als ein Strangpressprofil, als ein Blechprofil, welches aus einem oder mehren Blechen zusammengesetzt ist, als ein gegossenes Teil oder als ein rollprofiliertes und dann zu einem geschlossenen Querschnitt zusammengeschweißtes Hohlprofil. Auch kann die Schale des Profilträgers aus einem Verbundwerkstoff gefertigt sein oder sie kann eine Kombination verschiedener unterschiedlich gefertigter Einzelteile sein. Allgemein gilt, daß als Fertigungsverfahren und als Material für die Schale alle möglichen Fertigungsverfahren und Materialen in Frage kommen, mit und aus denen dünnwandige Profilträger gefertigt sein können.

Bei der Verwendung des erfindungsgemäßen Profilträgers weisen alle Konstruktionsvarianten die im wesentlichen gleiche Schale auf. Durch moderne Fertigungsverfahren lassen sich die Schalen sehr günstig in großen Stückzahlen fertigen. Müssen die Schalen jedoch für verschiedene Konstruktionsvarianten grundlegende verändert oder ergänzt werden, würde diese eine erhebliche Kostensteigerung bedeuten, da zusätzlich Werkzeuge und Vorrichtungen nötig wären. Die Erfindung besteht nun darin, für alle Konstruktionsvarianten die im wesentlichen gleichen Schalen zu verwenden, d. h. Material, geometrische Abmessungen wie Schalendicken, Innenräume etc. sind für alle Konstruktionsvarianten gleich. Lediglich kleiner Änderungen wie z. B. zusätzliche Löcher, Ausschnitte und Eindrückungen, die allesamt mit einfachen Mitteln erzeugt werden können, sind zwischen den Schalen der verschiedenen Konstruktionsvarianten zulässig.

In der Regel bestehen an die verschiedenen Konstruktionsvarianten des Profilträgers unterschiedliche Anforderungen bezüglich der zu ertragenden Belastung. Aber auch andere Anforderungen an die Konstruktionsvariante wie zusätzliche Befestigungsmöglichkeiten, innere Hohlräume oder Ähnliches können auftreten. Erfindungsgemäß wird diese Anpassung an die unterschiedlichen Anforderungen gelöst, indem für jede Konstruktionsvariante ein eigener Kern in die Schale eingesetzt und mit dieser ganz oder teilweise kraftschlüssig verbunden ist. Dieser Kern ist so auf die Schale abgestimmt, daß für diese Konstruktionsvariante die spezifischen Anforderungen erfüllt werden durch das Zusammenwirken der für alle Konstruktionsvarianten gleichen Schale und diesem entsprechend abgestimmten Kern.

Vorteilhaft besteht der Kern des Profilträgers zumindest teilweise aus einem geschäumten Werkstoff mit spezifisch geringem Gewicht. Derartige geschäumte Kerne werden bereits in einer Vielzahl lasttragender Strukturen, vor allem bei Sandwichbauweisen, aber auch in Profilträgern eingesetzt. Durch die Auswahl des geschäumten Werkstoffes, aber auch durch seine Verarbeitung und Formgebung lassen sich Kerne erstellen, die beliebige Steifigkeiten und Stützfunktionen aufweisen. Der Kern kann aus einem Halbzeug, daß bereits die geschäumte Struktur aufweist, gefertigt sein, oder aber der Kern wird direkt in der Schale geschäumt, wie oben im Stand der Technik beschrieben.

Eine weitere vorteilhafte Ausgestaltung sieht vor, daß der Kern zumindest teilweise einen wabenförmigen Aufbau aufweist. Solche wabenförmigen Kerne sind hochbelastbar und lassen sich durch Gestaltung des Wabenmaterials wie Lochdurchmesser und Dicken an beliebige Lastverteilung in der Schale anpassen.

Aufgrund der unterschiedlichen Ausführungen der Kerne der einzelen Konstuktionsvarianten weisen die Kerne unterschiedliche mechanischen Kennwerte der Festigkeiten und/oder Steifigkeiten auf. Weiterhin versteht es sich von selbst, daß auch die mechanischen Kennwerte des Kerns über den Profilträgerquerschnitt veränderlich sein können.

Eine weitere vorteilhafte Ausgestaltung der Erfindung sieht vor, daß der Kern zumindest teilweise Stützstrukturen enthält, die aus einzelnen Schalen-, Verstärkungs- und/oder Befestigungselementen aufgebaut sind. Derartige Stützelemente sind im Gegensatz zum schaumförmigen Kern massiv ausgeführt. Sie dienen u. A. der Befestigung anderer Bauteile, der örtlichen Unterstützung der Schale an Lasteinleitungsstellen und/oder als Aggregateträger, wobei die Aggregate innerhalb oder außerhalb der Schale angeordnet sein können. Durch die Anordnung verschiedener Stützelemente an unterschiedlichen Positionen innerhalb der Schale entstehen die verschiedenen Kerne für die einzelnen Konstruktionsvarianten, die jeweils andere Anforderungen erfüllen.

Vorteilhaft sind die Stützelemente zu einem zusammenhängenden Kern verbunden. Dabei kann die Verbindung aus Schaumstrukturen bestehen, in die diese Elemente ein- oder angebunden sind. Die Verbindung kann aber auch durch diskrete Stützrippen bestehen, die die einzelnen Stützelemente verbinden.

Eine weitere Ausführung sieht vor, daß der Kern zumindest teilweise nur aus vereinzelten Stützrippen besteht, die einzeln an die Schale angebunden sind. Diese Stützrippen können wieder miteinander verbunden sein: entweder durch einzelne Stützelemente oder sie sind durch Schaumstrukturen eingebunden.

Eine weitere erfindungsgemäße Lösung der Aufgabe ist dadurch gekennzeichnet, daß die Anpassung des Profilträgers an die Anforderungen der verschiedenen Konstruktionsvarianten über die konstruktive Ausgestaltung der Schale erfolgt, indem unter anderem das Material, die Form, die Dichte und die Festigkeit der Schale an die auftretenden Anforderungen angepaßt ist, während der Kern für alle Konstruktionsvarianten im wesentlichen gleich bleibt.

Dieses Prinzip entspricht der Umkehrung des Anspruches 1. Nicht der Kern wird an die unterschiedlichen Anforderungen der verschiedenen Konstruktionsvarianten angepaßt, sondern die Schale. Dies kommt vor allem in Betracht, wenn ein sehr aufwendiger und komplexer Kern, in den relativ viel Funktionalität integriert ist, in verschiedenen Konstruktionsvarianten eingesetzt werden soll.

Vorteilhaft anwendbar ist dieses Konzept bei Schalen, deren Dicke leicht verändert werden kann, z. B. bei Schalen aus Verbundwerkstoffen, bei Strangpreßprofilen, in gewissen Umfang auch bei Tiefziehblechen. In solchen Fällen ist es einfacher, die Schale durch entsprechende Dickenanpassung und/oder zusätzliche Verbundwerkstoffschichten an die geforderte neuen Anforderungen anzupassen. Die Änderung des Kernes wäre erheblich aufwendiger. Somit erfordert die Anpassung der Schale an die verschiedenen Konstruktionsvarianten weniger Entwicklungs- und Fertigungsaufwand als die Anpassung des Kernes.

Anwendung findet der erfindungsgemäße Profilträger in allen lasttragenden Strukturen. Bevorzugtes Anwendungsgebiet ist der Fahrzeugbau, wo aus einer Grundkonstruktion viele Varianten entwickelt werden, an die ganz unterschiedliche Anforderungen gestellt werden können. Beispiel für einen Profilträger mit verschiedenen Konstruktionsvarianten ist der Türschweller einer Kraftfahrzeugbodengruppe. Bei der Verwendung in einem geschlossenen Fahrzeug wie Limousine, Kombi o. ä. genügt die Ausgestaltung des Türschwellers mit wenig Stützelementen. Bei der Verwendung in einem offen Fahrzeug, z. B. in einem Kabriolett, bei dem eine wesentlich erhöhte Steifigkeit der Bodengruppe erforderlich ist, kann erfindungsgemäß der gleiche Türschweller benutzt werden. Durch Einbringen eines Kerns, der zusätzliche Stützwirkung entfaltet und weitere Lasteinleitungspunkte bzw. Stützelemente enthält, wird eine höhere Steifigkeit des Türschwellers erreicht, ohne daß die Blechstruktur des Türschwellers, d. h. die Schale wesentlich geändert wurde.

Ein weiteres Beispiel ist die Verwendung der gleichen Vorderwagenstruktur in Fahrzeugen mit stark unterschiedlichen Fahrzeuggewichten, z. B. bei Verwendung der gleichen vorderen Längsträger - der auch einen Profilträger darstellt - in einem leichten Kompaktfahrzeug und in einer relativ dazu schweren Großraumlimousine. Die wesentliche Belastung resultiert aus der Unfallbelastung bei einem Frontallaufprall, wo eine hohe Energieaufnahme bei großer Nachgiebigkeit des Längsträgers gefordert wird. Damit der gleiche Längsträger ähnliche Aufprallverzögerungen der Fahrzeuge sowohl beim leichten wie auch beim schweren Fahrzeuge bewirkt, wird im Falle des schweren Fahrzeuges ein wesentlich steiferer bzw. wesentlich mehr stützender Kern in den Längsträger eingebracht. Da in der Regel noch mehr Fahrzeugvarianten mit den unterschiedlichsten Gesamtgewichten existieren, kann mittels des Kernes sehr spezifisch jeder Längsträger angepaßt werden; es ist sogar möglich, die Längsträger gleicher Fahrzeugmodelle mit unterschiedlicher Motorisierung und/oder Ausstattung mittels entsprechender Kerne an die geforderten Eigenschaften anzupassen.

## Patentansprüche

1. Verwendung eines Profilträgers einer lastaufnehmenden Struktur in verschiedenen Konstruktionsvarianten, wobei der Profilträger eine im wesentlichen die Außenkontur formende, dünnwandige tragende Schale und einen im von der Schale umschlossenen Innenraum angeordneten, die Schale stützenden Kern aufweist, und wobei der Kern den Innenraum ganz oder teilweise ausfüllt,
**dadurch gekennzeichnet, daß**
die Anpassung des Profilträgers an die Anforderungen der verschiedenen Konstruktionsvarianten über die konstruktive Ausgestaltung des Kernes erfolgt, indem unter anderem das Material, die Form, die Dichte und die Festigkeit des Kernes an die auftretenden Anforderungen angepaßt ist, während die Schale für alle Konstruktionsvarianten im wesentlichen gleich bleibt.

2. Verwendung eines Profilträgers nach Anspruch 1,
**dadurch gekennzeichnet, daß**
zumindest in einer Konstruktionsvariante der Kern des Profilträgers zumindest teilweise aus einem geschäumten Werkstoff mit spezifisch geringem Gewicht besteht.

3. Verwendung eines Profilträgers nach Anspruch 1,
**dadurch gekennzeichnet, daß**
zumindest in einer Konstruktionsvariante der Kern zumindest teilweise einen wabenförmigen Aufbau aufweist.

4. Verwendung eines Profilträgers nach einem der vorherigen Ansprüche,
**dadurch gekennzeichnet, daß**
der Kern bei zumindest zwei verschiedenen Konstruktionsvarianten unterschiedliche mechanische Kennwerte der Festigkeiten und/oder Steifigkeiten aufweist.

5. Verwendung eines Profilträgers nach einem der vorherigen Ansprüche,
**dadurch gekennzeichnet, daß**
zumindest in einer Konstruktionsvariante der Kern über den Querschnitt und/oder in Längsrichtung des Profilträgers veränderliche mechanische Kennwerte aufweist.

6. Verwendung eines Profilträgers nach Anspruch 1,
**dadurch gekennzeichnet, daß**
zumindest in einer Konstruktionsvariante der Kern zumindest teilweise Stützstrukturen enthält, die aus einzelnen Schalen-, Verstärkungsund/oder Befestigungselementen aufgebaut sind.

7. Verwendung eines Profilträgers nach Anspruch 1,
**dadurch gekennzeichnet, daß**
der Kern zumindest teilweise nur aus vereinzelten Stützrippen besteht, die einzeln an die Schale angebunden sind.

8. Verwendung eines Profilträgers einer lastaufnehmenden Struktur in verschiedenen Konstruktionsvarianten, wobei der Profilträger eine im wesentlichen die Außenkontur formende, dünnwandige tragende Schale und einen im von der Schale umschlossenen Innenraum angeordneten, die Schale stützenden Kern aufweist, und wobei der Kern den Innenraum ganz oder teilweise ausfüllt,
**dadurch gekennzeichnet, daß**
die Anpassung des Profilträgers an die Anforderungen der verschiedenen Konstruktionsvarianten über die konstruktive Ausgestaltung der Schale erfolgt, indem unter anderem das Material, die Form, die Dichte und die Festigkeit der Schale an die auftretenden Anforderungen angepaßt ist, während der Kern für alle Konstruktionsvarianten im wesentlichen gleich bleibt.

9. Verwendung eines Profilträgers nach Anspruch 8,
**dadurch gekennzeichnet, daß**
die Schale zumindest einer Konstruktionsvariante aus einem Verbundwerkstoff besteht.
